# EUROPEAN PATENT APPLICATION

(11) **EP 2 924 852 A1**
(43) Date of publication of application: **30.09.2015**
(21) Application number: 14305442.7
(22) Date of filing: 27.03.2014
(51) Int. Cl.: H02K 5/18, H02K 11/00, H02K 9/19

(54) **High speed electrical machine with embedded drive**

(71) Applicant: SKF MAGNETIC MECHATRONICS, 27950 Saint-Marcel (FR)
(72) Inventor: Lateb, Ramdane, 27100 Val de Reuil (FR); Herisse, Eddy, 27700 Les Andelys (FR)
(74) Representative: David, Alain

(57) **Abstract**

A electrical machine with an embedded electronic control module comprising an outer housing (20) having, along an exterior surface (20B) of said outer housing, cooling fins (24) defining passages (26) therebetween, the electronic control module (36) comprising signal and power components (38) mounted on a printed circuit board (40) resting on a heat dissipater (30), wherein said heat dissipater comprises dissipating fins (30A) which protrude in the passages of the outer housing in order to increase the cooling surface and to create a turbulent effect for the common cooling fluid circulating between the heat dissipater and the outer housing.

## Description

### TECHNICAL FIELD

The present invention relates to the field of electrical machines and more particularly to a high speed electrical motor with embedded drive that present a compact structure with an improvement of its cooling.

### PRIOR ART

Classically, due to the increase of power of electrical motors, high speed electrical machine must be cooled during operation and classically are equipped with gas (particularly air) or liquid (particularly water) cooling process. Electronic control modules comprise signal and high power components mounted on a printed circuit board that require cooling too. But generally the cooling of the electronic module is separated (eventually series connected) from the cooling of the motor. Such a structural configuration suffers of several drawbacks due to the external cables connection or to the throughput of the machine.

### SUMMARY OF THE INVENTION

The object of the present invention is to overcome these disadvantages of the prior art by an electrical machine incorporating its electronic control module and having an improved cooling process.

The invention achieves these goals with an electrical machine with an embedded electronic control module comprising an outer housing having, along an exterior surface of said outer housing, cooling fins that define passages therebetween, the electronic control module comprising signal and power components mounted on a printed circuit board resting on a heat dissipater, wherein said heat dissipater comprises dissipating fins which protrude in the passages of the outer housing in order to increase the cooling surface and to create a turbulent effect for the common cooling fluid circulating between the heat dissipater and the outer housing.

With this particular configuration, the cooling of the motor and the electronic control module must be taken in common and consequently, it induces a compact machine structure and reduced production costs.

Advantageously, said dissipating fins distributed opposite to the printed circuit board being of the following shape: continuous, discontinuous or made of small protrusions.

Preferably, said dissipating fins are disposed with said cooling fins in an entanglement principle.

Advantageously, said cooling fins are distributed in a radial or axial configuration along the surface of the rotor or located in particular surfaces.

Preferably, said heat dissipater is affixed to the outer housing by fixing means and seals are fitted between the heat dissipater and the outer housing for isolating the cooling fluid and said cooling fins are realised by sand casting such that the surface roughness of said exterior surface is well adapted for heat exchanges.

### BRIEF DESCRIPTION OF THE DRAWINGS

The invention will be better understood in view of the following detailed description, accompanied by illustrative and non-limiting examples with regard to the accompanying drawings, in which:
- Figure 1 is a longitudinal section view schematically illustrating an electrical motor with an embedded electronic control module which allows improved cooling according to the invention, and
- Figures 2A to 2C illustrate different embodiments of a heat dissipater cooperating with the outer housing of the electrical motor of figure 1, and
- figure 3 shows a variant of the outer housing of the electrical motor of figure 1.

### DETAILED DESCRIPTION

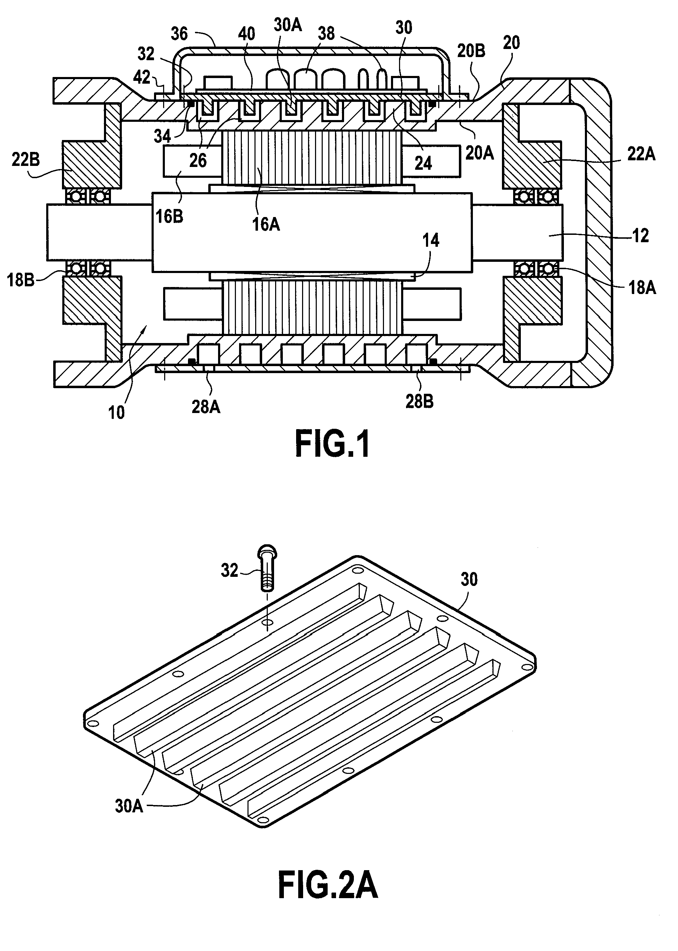

Figure 1 is a longitudinal section view schematically illustrating one embodiment of an electrical machine with embedded drive such as a high speed motor which allows improved cooling according to the invention.

Basically, an electrical motor 10 comprises a rotatable shaft 12 a part of which forms a rotor 14 having at least a magnetic portion surrounded by a stator 16. The rotatable shaft is supported at each end by bearings 18A, 18B, for example rolling bearing as illustrated or magnetic bearings (not shown). The stator is disposed within an outer housing 20 of the motor and comprises a laminated magnetic stack 16A surrounded by a windings 16B and disposed along a periphery of the rotor to define an annular air gap therebetween. More particularly, the laminated magnetic stack abuts against a central portion of the outer housing 20 which also extends on either side to enclose the other components of the motor. Furthermore, transverse walls 22A, 22B close the outer housing on each side of the rotatable shaft and also form internal supports for the bearings.

More particularly, the outer housing 20 which has an interior surface 20A configured in its central portion to interface with the laminated magnetic stack 16A of the electrical motor comprises, in said central portion, an exterior surface 20B having cooling fins 24 of the same height and defining passages 26 therebetween for a cooling fluid which can be either gas (air for example) or liquid (water for example). A cooling path from an inlet hole 28A receiving the cooling fluid from an inlet manifold (not shown) to an outlet hole 28B delivering the cooling fluid to an outlet manifold (not shown), is created by a cover plate 30 affixed to the outer housing 20 by fixing means 32 such as bolts or screws. Seals 34 are fitted between the cover plate and the outer housing for isolating the cooling fluid.

According to the invention, such cover plate 30 constitutes a heat dissipater for an electronic control module 36 of the high speed motor which is integrally connected (via screws 42 for example) or embedded to the high speed motor. This electronic control module which is necessary for controlling the operation of the motor and particularly regulating the rotational speed for example, classically comprise signal and power components 38 mounted on a printed circuit board (PCB 40) that require cooling too. The printed circuit board is preferably maintained by adhesive on the heat dissipater.

As illustrated in figures 2A to 2C, the cover plate 30 made of a material having a high conductivity comprises on its surface opposite to the PCB 40 dissipating fins 30A which protrude in the passages 26 of the outer housing in order to increase the cooling surface and to create a turbulent effect for the cooling fluid circulating between the cover plate and the outer housing.

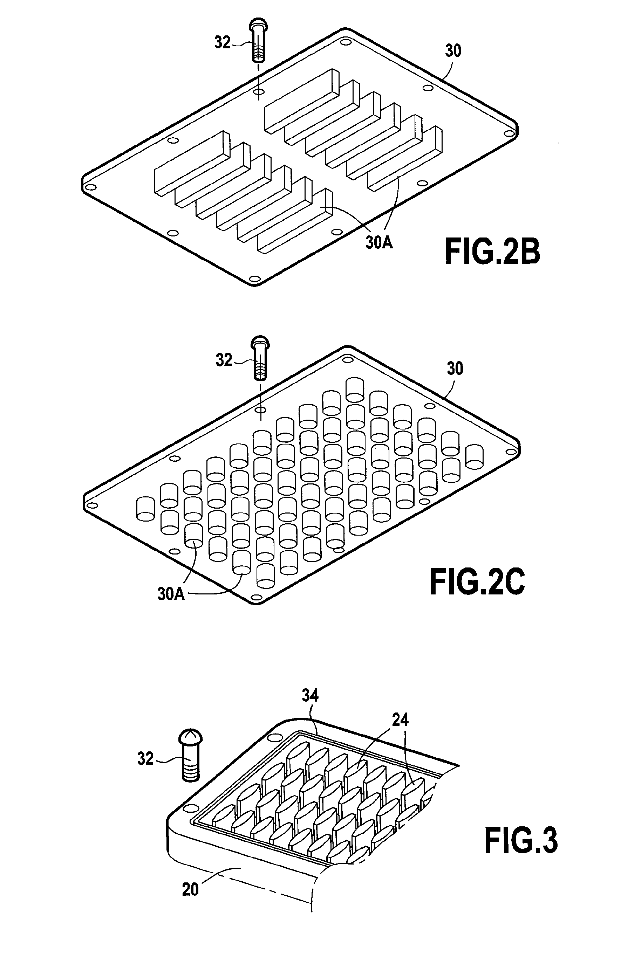

The dissipating fins 30A can have different shapes and, for example, can be continuous as in figure 2A or discontinuous as in figure 2B or can be made of small protrusions as in figure 2C and the dissipating fins can be configured advantageously with the cooling fins in an entanglement principle.

The cooling fins 24 on the outer housing can be distributed along the surface of the rotor or located, as shown in figure 1, in particular surfaces, while the dissipating fins 30A of the heat dissipater are naturally limited to the PCB. The cooling fins can be radial or axial configuration (not shown).

The outer housing with its cooling fins is preferably realised by sand casting (it means that the internal cooling system is leak free and the surface roughness is well adapted for heat exchanges).

The operation of an electrical motor is known and will not be explained in detail. Classically, during operation rotor 14 rotates with rotatable shaft 12 within stator 16, so that the annular air gap is maintained between the two components to form part of a closed magnetic flux path. An excitation current in the windings creates a magnetic force to drive the magnetic flux which attracts rotor 14 toward the stator 16, according to well-known principles of magnetism, and tends thus to urge the rotor to create a working torque output.

The cooling is processed during the operation of the motor. An inlet manifold (not shown) drives the cooling flow from an entry pipe or a blower (not shown and depending of the cooling type) into the outer housing via the inlet hole 28A. This flow of cooling fluid circulates around the electrical motor and leaves by the outlet hole 28B in the outlet manifold (not shown). The cooperation of the cooling fins 24 and the dissipating fins 30A creates a turbulent effect for the fluid path and then an improved cooling.

With the invention, a better power density is obtained and a common cooling of the whole machine including the motor and the embedded control module is realized.

Although preferred embodiments have been shown and described, it should be understood that any changes and modifications may be made therein without departing from the scope of the invention. More particularly, if the invention has been described through an electrical motor, any other electrical machine having tip speeds up to 300m/s with embedded drive (including turbine, pump, compressors, generators, starters, alternators, etc.) and stator laminations that interface with the disclosed heat dissipater cover plate is conceivable.

## Claims

1. A electrical machine with an embedded electronic control module comprising an outer housing (20) having, along an exterior surface (20B) of said outer housing, cooling fins (24) that define passages (26) therebetween, the electronic control module (36) comprising signal and power components (38) mounted on a printed circuit board (40) resting on a heat dissipater (30), wherein said heat dissipater comprises dissipating fins (30A) which protrude in the passages of the outer housing in order to increase the cooling surface and to create a turbulent effect for the common cooling fluid circulating between the heat dissipater and the outer housing.

2. The electrical machine of claim 1, wherein said dissipating fins distributed opposite to the printed circuit board being of the following shape: continuous, discontinuous or made of small protrusions.

3. The electrical machine of claim 2, wherein said dissipating fins are disposed with said cooling fins in an entanglement principle.

4. The electrical machine of claim 1, wherein said cooling fins are distributed in a radial or axial configuration along the surface of the rotor or located in particular surfaces.

5. The electrical machine of claim 4, wherein said cooling fins are realised by sand casting such that the surface roughness of said exterior surface is well adapted for heat exchanges.

6. The electrical machine of claim 1, wherein said heat dissipater is affixed to the outer housing by fixing means (32) and seals (34) are fitted between said cover plate and the outer housing for isolating the cooling fluid.

7. The electrical machine of claim 1, comprising one of the following devices: a turbine, a pump, a motor, a generator, a starter, an alternator, a compressor.
